Europäisches Patentamt

European Patent Office

Office européen des brevets

(11) Publication number: **0 074 147**
**B1**

(12) **EUROPEAN PATENT SPECIFICATION**

(45) Date of publication of patent specification: **14.12.88**

(21) Application number: **82201082.3**

(22) Date of filing: **03.09.82**

(51) Int. Cl.⁴: **F 16 L 55/00** // G01M3/02

(54) An apparatus and a method for uniformly moving an electric cable and a measuring unit connected thereto in the interior of a tubing circuit section.

(30) Priority: **04.09.81 NL 8104112**

(43) Date of publication of application:
**16.03.83 Bulletin 83/11**

(45) Publication of the grant of the patent:
**14.12.88 Bulletin 88/50**

(84) Designated Contracting States:
**BE DE FR GB IT**

(56) References cited:
**GB-A- 942 343**
**GB-A-1 453 189**
**US-A-3 656 552**

(73) Proprietor: **Nucon Engineering & Contracting B.V.**
**Aemstelborgh Weesperzijde 150**
**NL-1097 DS Amsterdam (NL)**

(72) Inventor: **Versluis, Ronald**
**Doornenburg 192**
**NL-2402 KK Alphen a/d Rijn (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Courier Press, Leamington Spa, England.

## Description

The invention relates to an apparatus adapted to be advanced along the inner wall of a tube or a tubing circuit section of a tubing assembly, such as used for example in heat exchangers or steam generators, and capable of moving an electric cable with a measuring unit connected thereto smoothly through that tube or tubing section, which measuring unit may be used for internally inspecting the tube or tubing section. Furthermore the invention relates to a method to advance such an apparatus in a tube or tubing section, and to a method to remove that apparatus from the tube or tubing section.

Mostly, it is necessary to inspect a tubing circuit section of a tubing assembly of e.g. steam generators or heat exchangers. To this effect it is required that a measuring unit and an electric cable electrically connected thereto are advanced uniformly with an optimally defined movement through the interior of the tubing circuit section to be inspected. The construction of the tubing assembly to be thus inspected mostly requires that the measuring unit/cable should be capable of being conducted from one and the same position in and out of the tubing circuit section to be inspected. In other words, it should be possible from such a position to advance the measuring unit/cable in the one or in the other direction through the respective tubing circuit section. Allowance should be made in this respect for the fact that a tubing circuit section to be inspected does not extend exclusively in a straight direction in practice. As a rule, it concerns tubes that are bent in different manners, for instance helically wound tubes, tube sections bent in U-shape and other bent forms. In case of strongly bent forms or of helically wound tubes, the advancing movement will become irregular and even may be discontinued due to the contact of the cable against the interior tubing surface. By retracting the cable, this will become stuck, which may result in that the measuring unit/cable becomes completely immovable. In general it applies that numerous unevennesses occur on the interior surface of a piping circuit section to be inspected, e.g. in places where weld connections have been made. As a result of such unevennesses, the advance of the measuring unit/cable can be impeded; it may occur that as a result the measuring unit/cable becomes immovable and can no longer be advanced in either direction.

GB-A-1,453,189 discloses an apparatus and a method for advancing a measuring unit and an electric cable through tubular conduits, such as used in heat exchangers and steam generator equipment, for internally inspecting those tubular conduits. A basic embodiment of these prior art proposals comprises a probe of a size small enough to pass freely along the bore of the conduit, electrical leads arranged to connect the probe to a monitoring instrument external of the conduit, a plurality of pistons maintained in a longitudinally spaced apart relationship at intervals along the leads with the leads passing through the pistons and each piston being of such a size that it is a loose sliding fit in the conduit, and a pressurized fluid supply means connectable to the end of said conduit to supply a stream of pressurized fluid to the conduit in order to urge the probe along the conduit.

A basis method for the internal inspection of a tubular conduit using an apparatus according to the above-mentioned basic embodiment according to these prior art proposals comprises inserting the probe and at least one of the pistons into one end of the conduit and supplying a stream of pressurized fluid to the end of the conduit to urge the probe and piston along the conduit, and connecting the electrical leads to the monitoring instrument. The pressurized fluid flows past the pistons on the probe line within the tubular conduit.

The total force thereby provided is greater than the frictional resistance generated between the pistons and the enclosing walls, and thus the probe is moved forward. Smooth or uniform advance however is not always ensured, especially when scale deposits and/or welds are present in the tubular conduit or when the tubular conduit shows severe kinks and bends. It may even occur that the pistons get stuck. Further, the force provided by the pressurized fluid is a dynamic force, which means that the force is provided because of the friction between the flowing fluid and the pistons. Even when the apparatus is stationary the fluid has to keep flowing in order to keep the cable stretched.

GB-A-942,343 discloses an apparatus to be pumped through a pipe. Such apparatus may be used to advance a tool through the flowline and tubing string of a well. The basic embodiment of this prior art apparatus comprises at least one expansible annular packer made of resiliently deformable material, which packer can be expanded under the application of internal fluid pressure to form a liquid tight seal between the packer and the tubing wall.

This apparatus however is not suited to be pumped through a pipe showing severe bends, or obstructions provided by tube welds.

Furthermore this apparatus is not suited to be used to advance an electric cable in such a way that the cable is passed through the apparatus. Thus it is not possible to use a plurality of these devices along the length of the cable. Above that the apparatus is rather complicated and thus expensive.

It is an object of the present invention to improve the prior art as disclosed in GB-A-1,453,189, and to provide an apparatus capable of uniformly advancing a measuring unit and an electric cable connected thereto, with an optimally defined movement through the interior of a tubing circuit section to be inspected.

The solution proposed by the invention is based on the principle that a liquid column is not or practically not compressible. More in particular the invention underlies the idea to create between a thrust source and the respective end portion of a cable to be advanced, a plurality of liquid columns operative in tandem relationship in the tubing circuit section to be inspected.

An apparatus for uniformly advancing a measuring unit and an electric cable connected thereto, with an optimally defined movement through the interior of a tubing circuit section to be inspected in response to a thrust exerted in a selected axial direction, comprising a plurality of elementary units maintained in longitudinally spaced apart relationship at intervals along the cable, is according to the invention characterized in that
- each elementary unit comprises a set of sealing ridges each made of resiliently deformable material, said sealing ridges being coaxially disposed and axially spaced from each other;
- each of said sealing ridges is adapted to provide a liquid-tight seal against said inner wall, at least when stationary relative thereto;
- each elementary unit comprises control means which, in response to thrust exerted thereon, selectively cause the outer circumference of only that sealing ridge which is the leading one when said elementary unit is moving, to become cleared from said inner wall, thereby ensuring said elementary unit can smoothly advance.

A preferred embodiment including a movable supporting section composed of two elementary units as described above, wherein said elementary units are interconnected by means of a coaxial hollow tube of flexible material, is according to the invention characterized in that the length of such a movable supporting section is about 20-50 times smaller than the length of a cable attached between a pair of successive movable supporting sections.

By forming through such elementary units the liquid columns confined in tandem relationship, the interspaces between the advanced elementary units remain constant, so that the electric cable will continue to extend in the tubing circuit according to a more or less neutral line, thus preventing contact against the interior tube surface as well as a possible sticking effect in the interior of the tube in both directions of advance.

A possible embodiment of such an elementary unit according to the invention is further characterized in:
- that said control means include a substantially cylindrical slide comprising two disc-shaped flanges;
- that said slide is slidably mounted with respect to the sealing ridges;
- that said sealing ridges comprise chambers which are expandable in the axial direction;
- that said slide, in response to thrust exerted in the one or the other of the axial directions, can slide with respect to the sealing ridges in the one resp. the other of the axial directions, in such a way that its leading disc-shaped flange, by pushing against a shoulder included in the sealing ridge, stretches the leading chamber and thereby diminishes the outer circumference of the leading sealing ridge and advances said elementary unit along said tube.

Such a movable supporting member has a simple and reliable construction and can be advantageously applied in situations in which the thrust functions likewise as control pressure.

Another possible embodiment of a movable supporting member according to the invention is characterized in:
- that said elementary unit includes a housing having two pressure chambers;
- that said pressure chambers are coaxially aligned with each other, and insulated from each other;
- that said pressure chambers are both surrounded by a sealing ridge;
- that said pressure chambers are both adapted to receive control pressure through control pipes;
- that said control means include an axially extensible wall portion in each of said pressure chambers;
- that said extensible wall portion, in response to control pressure supplied to said pressure chamber extend in the axial direction of the elementary unit, such that the outer circumference of its surrounding sealing ridge is reduced.

The two control pressure pipes extend together with the electric cable as composite cable from the elementary unit present closest to the measuring unit and via all successive elementary units towards the end of the composite cable where they are connected to control pressure sources.

For practising the present invention it is proposed to use a plurality of movable supporting sections which are each composed of two elementary units of the above described embodiments, while such a pair of elementary units is interconnected through a coaxial hollow tube of flexible material. Through said hollow tube extends the electric cable, possibly together with the said two control pressure pipes, as composite cable.

The hollow tube of such a movable supporting section preferably is provided with one or more substantially spherical thickenings. It is thus achieved that under all practical conditions it is ensured that the cable to be supported by the elementary units, respectively supporting sections and to be advanced in the respective tubing circuit section, is not twisted and/or pressed against the interior tube wall, so that the respective elementary units are prevented from tilting within the tube, thus obtaining an accurately defined progress of said cable and the measuring unit connected thereto in the tubing circuit section to be inspected. In this connection, it should be understood by accurately defined progress such a progress that a unit of displacement of the liquid mass at the outlet of the thrust source corresponds with the unit of displacement of the measuring unit present in the interior of the tubing circuit section to be inspected. Such a defined progress may for instance be disturbed by tube-tube weld connections occurring in tubing circuit sections having a given bent form and/or ovalities in a tubing circuit section.

According to a further aspect of the invention various specimens of the above described movable supporting sections are now attached to an electric cable with a measuring unit electrically connected to the one end thereof, for use in the inspection of a tubing circuit section. In practice, this means that successive ones of these movable supporting sections are threaded on the cable, so that this extends substantially coaxially through all the movable supporting sections.

A configuration that was found practically favourable is obtained when with such an electric cable, the length of a movable supporting section each time is about 20-50 times smaller than the length of the cable present between successive movable supporting sections.

An apparatus for thus advancing a cable/measuring unit in a tubing circuit section to be inspected, comprising a first pressure vessel having a cable drum mounted therein for rotation, and a guide tube being in communication with the interior of the pressure vessel and terminating in the collecting head, is according to the invention characterized by: the free end of said tube being provided with a hydraulic coupling through which said guide tube can be connected to the tubing circuit section to be inspected; and a second pressure vessel being in communication with the interior of the collecting head.

In a method for advancing an electric cable to which such movable supporting sections are attached, in a tubing circuit section of a tubing system which comprises an accessible collecting head being in communication with various tubing circuits connected thereto in parallel relationship, the following steps are made according to the invention:

a) the said cable is entirely disposed in a pressure vessel being in communication with the inlet side of the tubing circuit section to be inspected;

b) the said pressure vessel, the said collecting head, as well as the tubing system are entirely filled with a liquid;

c) a thrust is exerted on the liquid present in the pressure vessel, while the liquid forced out of said pressure vessel is conducted via a separate circuit to the inlet side of the tubing circuit section to be inspected; and simultaneously with this step;

d) the interior of the collecting head, in so far being external relative to the said separate circuit, is brought into communication with a liquid discharge device.

Due to the incompressibility of the liquid present between successive ones of the elementary units, as well as due to the liquid-tight sealing fit of said elementary units in the interior of the tubing circuit section to be inspected, during the advance of the elementary units/supporting sections, the cable present therebetween is kept always in a more or less neutral line, e.g. in the axis of the tubing circuit section to be inspected, so that it is avoided that the cable will abut against, respectively become stuck in the interior of the tubing circuit section.

The invention also makes it possible to remove a cable-measuring unit thus introduced from the measuring position in the tubing circuit section to be inspected again from the same measuring position out of the respective tubing circuit section. According to the invention the following steps are then carried out:

a) the thrust exerted on the liquid present in said pressure vessel is removed;

b) said pressure vessel is brought in communication with a liquid discharge;

c) thrust is exerted on the liquid present in the collecting head in so far it is present outside said separate circuit.

With the apparatus and methods according to the invention it is achieved that:

1) the respective cable/measuring unit cannot become stuck in the tubing circuit section to be inspected;

2) the length of the tubing circuit section to be inspected is practically unlimited;

3) the progress of the cable/measuring unit is uniform, in other words without shocks, and without occurrence of vibrations and air bubbles, and

4) the progress directly depends on the mass flow produced by the thrust, i.e. the progress is purely defined. Thus it is possible to establish from the measuring position the location of the measuring unit in the tubing circuit section to be inspected.

Some embodiments of the present invention will now be described, by way of example, with reference to the accompanying drawings, wherein:

Fig. 1 diagrammatically shows a movable supporting section consisting of two tandem-connected elementary units (in a first embodiment) according to the invention, which section is in a first condition wherein no thrust is operative, as well as being present together with successive movable supporting sections in a tubing circuit section to be inspected;

Fig. 2 diagrammatically shows a second condition (with operative thrust) wherein the movable supporting section according to Fig. 1 may be present;

Fig. 3 diagrammatically shows an alternative embodiment of a supporting section consisting of two tandem-connected elementary units;

Fig. 4 diagrammatically shows the manner in which a cable with elementary units attached thereto according to the invention can be advanced in a tubing circuit section to be inspected;

Fig. 5 diagrammatically shows the manner in which the invention can be applied for inspecting tubes of a steam generator, said tubes having a helical pattern; and

Fig. 6 diagrammatically shows an apparatus for applying the method according to the invention.

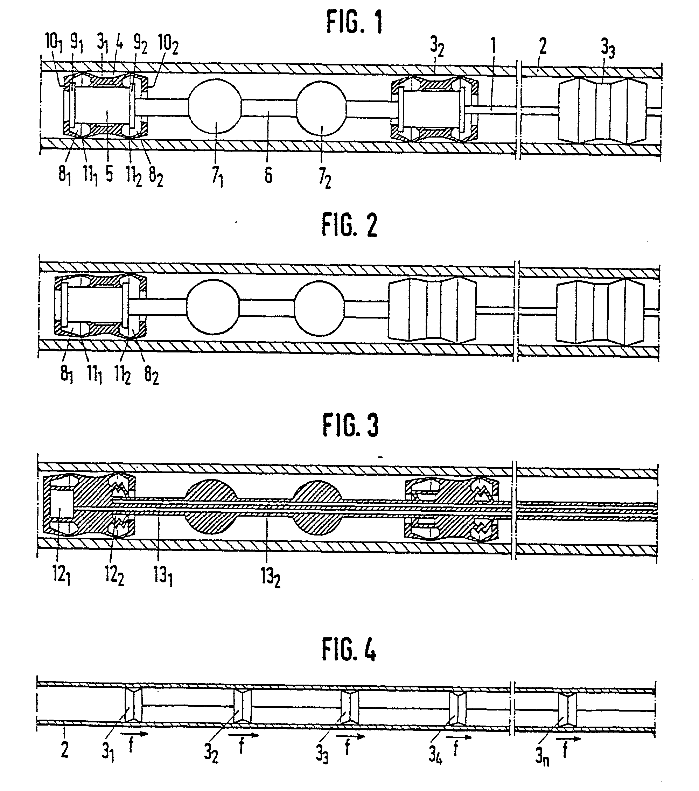

Fig. 1 diagrammatically shows a situation in which a cable 1 which, at the leftmost end in the figure, is connected to a measuring unit (not shown) present in a tubing circuit section 2 to be inspected. Said cable is threaded through, respectively attached to various successive elementary units 3, three of which being shown in the figure. Each of such an elementary unit comprises in the embodiment according to figures 1 and 2 a cuff-like housing 4 made of resiliently deformable material and a slide 5 slidable in both axial directions relative to said housing and supported therein. The slide of a pair of elementary units, such as $3_1$ and $3_2$, are interconnected through a flexible hollow tube 6 on which, in the embodiment shown, two substantially spherical thickenings $7_1$, $7_1$ are formed. Each housing 4 contains two chambers $8_1$, $8_2$ wherein the respective slide 5 and the associated disc-shaped flanges $9_1$, $9_2$ can move in axial direction. Each of said chambers is bounded by an annular stop shoulder $10_1$, $10_2$. During and for the purpose of the inspection all the respective chambers such as $8_1$, $8_2$, as well as the tube volume being in communication therewith, are filled with liquid, e.g. water. On account of the cuff-shape, each housing, such as 4, comprises two coaxially and axially spaced apart sealing ridges $11_1$, $11_2$ extending around the respective housing, which ridges are dimensioned in such a way that both in undeformed and deformed condition, at least one of them is in liquid-tight sealing relationship and fitting movably in the respective tube.

Fig. 1 shows the situation wherein the thrusts exerted by the liquid (operative in this figure from the right to the left) are such that all the housings 4 of the respective elementary units 3 are not expanded and the respective slide 5 with its left flange such as $9_1$ abuts against the associated stop shoulder such as $10_1$. When, starting from this moment, the liquid mass flow continues, in the first instance, as a result of the friction between the respective sealing ridges and the interior of the tube, the respective slide 5 will be shifted in axial direction relative to its housing (in the figure to the left) so that the respective housing is expanded in a manner as diagrammatically shown in figure 2. Such an expansion is such that the respective chamber such as $8_1$, is extended in axial direction so that the sealing ridge such as $11_1$ extending about said chamber obtains a smaller outer circumference, as a result of which said sealing ridge becomes spaced apart from the interior tube wall. By such an expansion of the elementary units, irregularities on the tube wall, for instance in spots where weld connections have been made, can be passed unimpededly without disturbing the uniform progress of the whole. The spherical thickenings such as $7_1$, $7_2$ ensure that in this respect no problems are created either when e.g. tube-tube welds have to be passed in sinuous tube sections, while the geometrical shape before and after the respective tube-tube weld is not the same and/or ovalities in bent tube sections. The balls in such a situation then function as additional spacers, so that the cable remains free from the tube wall and cannot twist, thus preventing elementary units from being pulled out of square, so that a properly defined advancing movement of the cable and the measuring unit connected thereto remains ensured. A practically effective embodiment is obtained when the elementary units are interconnected pair-wise by means of a hollow flexible tube such as 6 to a movable supporting section, while the length of such a movable supporting section is then a certain number of times smaller than the successive cable occurring between successive ones of such movable supporting sections. A practically favourable ratio is obtained when said distances are 100 mm, and 2000 mm respectively. With such dimensions, also helically wound tubing circuit sections with practically found pitch angles and diameters can be traversed conveniently.

A particular advantage of the invention also resides in that through the proposed constructions, the cable/measuring unit can be introduced from one and the same measuring position into the tube and also can be removed therefrom. In other words, the proposed elementary units can be used for transport in both axial directions. When e.g. the movable supporting sections, elementary units, respectively, shown in fig. 1 and 2, have to be moved instead of to the left, to the right, the thrust will be operative on the respective left-hand flanges such as $9_1$ of the slides 5. In the first instance the respective slide will then be shifted relative to its housing in axial direction, viz. to the right-hand side in the figure, so that then the respective right-hand flanges $9_2$ press against the associated stop shoulders such as $10_2$. Upon further progress of the mass liquid flow, the respective right-hand chambers such as $8_2$ will then be expanded in axial direction, so that then the associated sealing ridges such as $11_2$ will obtain a smaller outer circumference and as result become free from the internal tube wall. In this manner, in the direction of movement directed to the right, also an unimpeded and uniform progress of the whole is ensured.

In the embodiment shown in fig. 1 and 2 a slide such as 5 functions both as control means which, in response to a control pressure exerted thereon, likewise functioning as thrust, effects that the outer circumference of the sealing ridge to be considered as leading one in the direction of movement is reduced in such a way that said sealing ridge becomes free from the internal tube wall, as well as a portion of a drive member which, in response to the thrust exerted thereon, converts said thrust into a corresponding progress of the elementary unit in its entirety. In this embodiment, both the control pressure and the thrust are supplied by the same mass liquid flow which may be operative via the respective openings in the said annular stop shoulders, such as $10_1$, $10_2$.

The embodiment shown in fig. 3, as regards operation and apparatus, is similar to that according to fig. 1 and 2. The embodiment of fig. 3 differs substantially from the embodiment of fig. 1 and 2 in that in the embodiment of fig. 3 use is made on the one end of a separate thrust, on the other end of a separate control pressure. The thrust as produced by the mass liquid flow in the tubing circuit section to be inspected produces, as in the embodiment of fig. 1 and 2, that the elementary units/supporting sections and the cable attached thereto, in response to the direction wherein said thrust is operative, are advanced to the left or to the right in the figure. The above control operation in the embodiment of fig. 3, however, is ensured by two pressure chambers formed in each elementary unit 3, such as $12_1$, $12_2$, which are each extensible in axial direction. Each of said pressure chambers communicates with an associated control pressure pipe $13_1$, $13_2$, each being connected to a control pressure source, not shown, provided on that cable end which is not the measuring unit end. Said control pressured may be transmitted via the respective control pressure pipe via liquid to the respective pressure chambers. More in particular, when the assembly of elementary units and cable has to be advanced to the right, to the left respectively in fig. 3, the respective pressure chambers $12_2$, $12_1$ respectively, will be pressurized, so that the sealing ridge to be considered as leading one in the direction of movement, of the respective elementary units becomes free from the internal wall of the tubing circuit section to be inspected. With the thus expanded pressure chambers, the continuing mass liquid flow will advance the respective elementary units in the required direction.

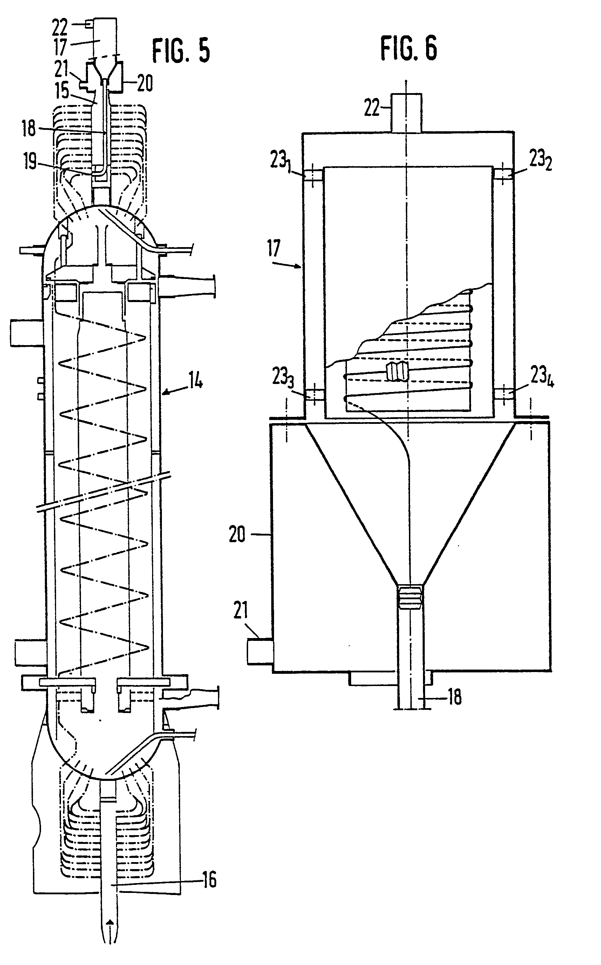

Fig. 4 illustrates the principle of the present invention. The cuff-shaped elementary units present in the liquid-filled tube section 2 are indicated by $3_1$, $3_2$ .... $3n$. In Fig. 4 is indicated by f the counter-pressure produced by friction between the respective elementary units and the internal tube wall, which counter-pressure has to be overcome for advancing the respective elementary unit in the required direction (fig. 4 to the left). Since the cuff-shaped elementary unit fit liquid-tight in the tube, it will be necessary to exert at the inlet side, i.e. the right-hand side in fig. 4, a thrust given by p+nf, wherein p represents the pressure to be overcome at the left-hand side of the elementary unit 3 for advancing the whole to the left. The said pressure difference f over the first or in the elementary unit $3_1$ to be considered the leading one in the direction of progress is such, that a successive elementary unit $3_2$ is drawn further into the tube and the measuring unit which is attached for instance in situ of the first elementary unit $3_1$, is advanced in the tube. Since, as explained in the above, always one of the sealing ridges of a respective elementary unit will continue to be sealing, the liquid columns between successive elementary units will always keep the same, at least substantially the same length, as a result of which the cable present in a liquid column, during the advance, continues to extend according to a more or less neutral line in the respective tubing circuit, e.g. according to the axis, so that contact against or becoming stuck in this tubing circuit is avoided, so that a defined and regular advance of the cable measuring unit is ensured. As additional security, the cuff-shaped elementary units are combined pair-wise to the movable supporting sections described in the above, so that a leak may be produced in one of the elementary units of such a pair, e.g. in situ of a weld, without adversely affecting the operation of the assembly.

With reference to fig. 5, methods will be described in the following through which, with use of the above described provisions, a cable/measuring unit can be introduced/advanced in, respectively removed from/advanced in a tube assembly. Without being restricted thereto, the invention illustrates a tube assembly with helical tubes of a steam generator. The steam generator indicated in general by 14 comprises an upper collecting head 15 and a lower collecting head 16. The lower head 16 communicates via a valve (not shown) with a water supply source. The tubing assembly of the steam generator is diagrammatically indicated in the figure by dashed/dotted lines. Each tubing circuit section forming a connection between the upper collecting head and the lower collecting head should now be separately inspectable. On account of practical technical reasons, it is required that the cable/measuring unit introduced from the upper collecting head can also be removed again from said position from the inspected tubing circuit section. When a cable/measuring unit has to be introduced in a given tubing circuit section for inspection purposes, the following procedure is followed. The provisions described in connection with fig. 1-3 are attached on the cable. Likewise, the measuring unit, directly before the first elementary unit, is attached thereto and connected electrically to the cable. The whole is then applied in the first pressure vessel 17 in a manner to be further indicated. From said pressure vessel, via a separate guide tube 18, there is formed a liquid-tight and compression-resistant connection with the inlet side 19 of the tubing circuit section to be inspected. A second pressure vessel 20 being in open communication with the upper collecting head 15 is connected through the pipe 21 to a liquid discharge. Subsequently, by opening the abovementioned valve, the whole tubing assembly, including the guide tube 18, the first pressure vessel 17 and the second pressure vessel 20, is entirely filled via the lower collecting head 16 with water which can flow away via pipe 21. Subsequently, thrust is exerted via pipe 22 on the liquid present in the first pressure vessel, so that in a manner to be further described the measuring unit and the first cuff-shaped elementary unit attached thereto are introduced via the guide tube 18 in the inlet side 19 into the tubing circuit section to be inspected. The liquid mass flow produced by the thrust effects then that the respective cuff-shaped elementary units and the cable attached thereto are advanced in the tubing circuit section to be inspected. If the thus introduced cable/measuring unit has to be subsequently removed from the inspected tubing circuit section, the following procedure is followed: the pipe 22 of the first pressure vessel is connected to a liquid discharge and the pipe 21 of the second pressure vessel is connected to a thrust source. When in this situation the thrust source becomes operative, thrust is transmitted via the upper collecting head 15 and the tubing circuit sections terminating therein (except the inspected tubing circuit section) to the lower collecting head 16, so that via said lower collecting head thrust is exerted on the inspected tubing circuit section. As explained in the above, the cable/measuring unit present therein is then moved in a direction towards the upper collecting head.

Fig. 6 diagrammatically shows the manner in which the above described cable with the movable supporting sections according to the invention attached thereto can be transported by the application of thrust towards and into a selected tubing circuit section. To this effect there is provided in the first pressure vessel 17 a cable drum mounted by rollers $23_1$ ..... $23_4$ for rotation about a vertical axis. The cable with the elementary units according to the invention attached thereto is wound about said drum. The bottom side of the first pressure vessel has a funnel-shaped configuration, so that, when thrust is exerted via pipe 22 on the liquid present in the pressure vessel, the drum is brought in rotation and the cable with the measuring unit connected to the end thereof, is pressed via the funnel-shaped guide wall into the guide tube 18. Upon continuing mass flow produced by the thrust, the measuring unit is then further advanced in the tubing section to be inspected.

Naturally, the invention can also be applied to other tubing assemblies for which it is required that certain tubing sections are inspected.

**Claims**

1. Apparatus adapted to be advanced along the inner wall of a tube (2) or tubing circuit section, for moving a cable (1) and/or holder attached thereto through said tube or tubing section in response to a thrust exerted in a selected axial direction, comprising a plurality of elementary units ($3_1$; $3_2$) maintained in longitudinally spaced apart relationship at intervals along the cable (1); characterized in that:
- each elementary unit ($3_1$; $3_2$) comprises a set of sealing ridges ($11_1$; $11_2$) each made of resiliently deformable material, said sealing ridges being coaxially disposed and axially spaced from each other;
- each of said sealing ridges ($11_1$; $11_2$) is adapted to provide a liquid-tight seal against said inner wall, at least when stationary relative thereto;
- each elementary unit ($3_1$; $3_2$) comprises control means (5) which, in response to thrust exerted thereon, selectively cause the outer circumference of only that sealing ridge which is the leading one when said elementary unit is moving, to become cleared from said inner wall, thereby ensuring said elementary unit can smoothly advance.

2. Apparatus according to claim 1, characterized in:
- that said control means include a substantially cylindrical slide (5) comprising two disc-shaped flanges ($9_1$; $9_2$);
- that said slide (5) is slidably mounted with respect to the sealing ridges ($11_1$; $11_2$);
- that said sealing ridges ($11_1$; $11_2$) comprise chambers ($8_1$; $8_2$) which are expandable in the axial direction;
- that said slide (5), in response to thrust exerted in the one resp. the other of the axial directions, in such a way that its leading disc-shaped flange ($9_1$, resp. $9_2$), by pushing against a shoulder ($10_1$, resp. $10_2$) included in the sealing ridge ($11_1$, resp. $11_2$), expands the leading chamber ($8_1$, resp. $8_2$) and thereby diminishes the outer circumference of the leading sealing ridge ($11_1$, resp. $11_2$), and advances said elementary unit ($3_1$; $3_2$) along said tube (2).

3. Apparatus according to claim 1, characterized in:
- that said elementary unit includes a housing having a first pressure chamber ($12_1$) and a second pressure chamber ($12_2$);
- that said pressure chambers ($12_1$; $12_2$) are coaxially aligned with each other, and insulated from each other;
- that said pressure chambers ($12_1$, $12_2$) are both surrounded by a sealing ridge;
- that said pressure chambers ($12_1$, $12_2$) are both adapted to receive control pressure;
- that said control means include an axially extensible wall portion in each of said pressure chambers ($12_1$, $12_2$);
- that said extensible wall portion, in response to control pressure supplied to said pressure chamber ($12_1$, resp. $12_2$), is caused to extend in the axial direction of the elementary unit, such that the outer circumference of its surrounding sealing ridge is reduced.

4. A movable supporting section composed of two elementary units, as described as part of an apparatus according to any one of claims 1-3, wherein said elementary units ($3_1$, $3_2$) are interconnected by means of a coaxial hollow tube (6) of flexible material, characterized in that the length of such a movable supporting section is about 20-50 times smaller than the length of a cable (1) attached between a pair of successive movable supporting sections.

5. Apparatus for advancing a cable with a number of movable supporting sections according to claim 4 attached to it, comprising a first pressure vessel (17) having a cable drum mounted therein for rotation, and a guide tube (18) being in communication with the interior of the pressure vessel and terminating in the collecting head (15); characterized by: the free end of said guide tube being provided with a hydraulic coupling through which said guide tube can be connected to the tubing circuit section to be inspected and a second pressure vessel (20) being in communication with the interior of the collecting head (15).

6. A method of advancing in a tubing circuit section a cable with a number of movable supporting sections according to claim 4 attached to it, characterized in that between the successive moving elementary units ($3_1$, $3_2$, ...., $3_n$) liquid columns are built up, and that from one end of the tubing circuit section a thrust is exerted on the assembly of movable elementary units, liquid columns and cable, contained therein.

7. A method of advancing a cable with a number of movable supporting sections according to claim 4 attached to it, using an apparatus according to claim 5, in a tubing circuit section of a tube assembly comprising an accessible collecting head (15) being in communication with various tubing circuits connected thereto in parallel relationship, while the following steps are carried out.

a) the said cable is applied in its entirety in a pressure vessel (17) being in communication with a tubing circuit section to be inspected;

b) the said pressure vessel (17), the collecting head (15), as well as the tubing assembly are entirely filled with a liquid;

c) a thrust is exerted on the liquid present in the pressure vessel (17), while the liquid forced out of said pressure vessel (17) is conducted via a separate circuit to the tubing circuit section to be inspected; and simultaneously with step c)

d) the interior of the collecting head (15), in so far it is external relative to the said separate circuit, is brought in communication with a liquid discharge.

8. A method of removing from a tubing circuit section a cable with a number of movable supporting sections according to claim 4 attached to it, using an apparatus according to claim 5, which cable, through application of the method according to claim 6, has been introduced in that tubing circuit section to be inspected, while the following steps are carried out:

a) the thrust exerted on the liquid present in said pressure vessel (17) is removed;

b) said pressure vessel (17) is brought in communication with a liquid discharge; and

c) thrust is exerted on the liquid present in the collecting head in so far this is present outside the said separate circuit.

**Patentansprüche**

1. Vorrichtung zum Verschieben längs der Innenwand eines Rohrs (2) oder eines Rohrleitungsabschnitts und zum Bewegen eines Kabels (1) und/oder eines daran angebrachten Halters durch das Rohr oder den Rohrabschnitt in Abhängigkeit von einem axialen Druck, der in einer gewünschten Axialrichtung ausgeübt wird, welche eine Mehrzahl von Teileinheiten ($3_1$;$3_2$)

aufweist, die in Längsrichtung im Abstand voneinander an Intervallen längs des Kabels (1) gehalten sind, dadurch gekennzeichnet, daß:

- jede Teileinheit ($3_1$; $3_2$) einen Satz von Dichtungskanten ($11_1$; $11_2$) aufweist, die jeweils aus federnd nachgiebigem verformbarem Material bestehen, wobei die Dichtkanten koaxial und im Abstand voneinander angeordnet sind,

- jede Dichtungskante ($11_1$; $11_2$) derart ausgelegt ist, daß man eine flüssigkeitsdichte Abdichtung gegen die Innenwand wenigstens dann erhält, wenn diese relativ zu der Wand stationär ist,

- jede Teileinheit ($3_1$; $3_2$) eine Steuereinrichtung (5) aufweist, die in Abhängigkeit von dem darauf ausgeübten axialen Druck selektiv bewirkt, daß der äußere Umfang lediglich der Dichtungskante, die die vorauslaufende bei der Bewegung der Teileinheit ist, von der Innenwand freikommt, wodurch sichergestellt wird, daß die Teileinheit sich gleichförmig weiterbewegen kann.

2. Vorrichtung nach Anspruch 1, dadurch gekennzeichnet, daß:

- die Steuereinrichtung ein im wesentlichen zylindrisches Gleitstück (5) enthält, das zwei scheibenförmige Flansche ($9_1$; $9_2$) aufweist;

- daß das Gleitstück (5) gleitbeweglich bezüglich der Dichtungskanten ($11_1$; $11_2$) angebracht ist,

- daß die Dichtungskanten ($11_1$; $11_2$) Kammern ($8_2$; $8_2$) aufweisen, die in axialer Richtung expandierbar sind,

- daß das Gleitstück (5) in Abhängigkeit von dem in der einen bzw. der anderen axialen Richtung derart ausgeübten Druck, daß der vorauslaufende scheibenförmige Flansch ($9_1$ bzw. $9_2$) unter Drücken gegen eine Schulter ($10_1$ bzw. $10_2$), die in der Dichtungskante ($11_1$ bzw. $11_2$) enthalten ist, zu einer Expansion der vorauslaufenden Kammer ($8_1$ bzw. $8_2$) führt und hierdurch sich der Außenumfang der vorauslaufenden Dichtungskante ($11_1$ bzw. $11_2$) verkleinert und die Teileinheit ($3_1$; $3_2$) längs des Rohrs (2) verschiebbar ist.

3. Vorrichtung nach Anspruch 1, dadurch gekennzeichnet, daß.

- die Teileinheit ein Gehäuse enthält, das eine erste Druckkammer ($12_1$) und eine zweite Druckkammer ($12_2$) hat,

- daß die Druckkammern ($12_1$; $12_2$) koaxial zueinander ausgerichtet und voneinander isoliert sind,

- daß die Druckkammern ($12_1$, $12_2$) beide von einer Dichtkante umgeben sind,

- daß die Druckkammern ($12_1$, $12_2$) beide zur Aufnahme eines Steuerdrucks ausgelegt sind,

- daß die Steuereinrichtung einen axial dehnbaren Wandabschnitt in jeder der Druckkammern ($12_1$, $12_2$) enthält,

- daß der dehnbare Wandabschnitt in Abhängigkeit von dem Steuerdruck, der an die Druckkammer ($12_1$ bzw. $12_2$) angelegt wird, bewirkt, daß die Teileinheit derart in axialer Richtung gestreckt wird,

- daß der Außenumfang ihrer umgebenden Dichtungskante vermindert wird.

4. Beweglicher Stützabschnitt, der aus zwei Teileinheiten besteht, die als Teil einer Vorrichtung nach einem der Ansprüche 1 bis 3 beschrieben sind, wobei die Teileinheiten (3₁, 3₂) miteinander mit Hilfe eines koaxialen hohlen Rohrs (6) aus flexiblem Material verbunden sind, dadurch gekennzeichnet, daß die Länge eines derartigen beweglichen Stützabschnittes etwa 20-50 mal kleiner als die Länge eines Kabels (1) ist, das zwischen zwei aufeinanderfolgenden, beweglichen Stützabschnitten angebracht ist.

5. Vorrichtung zum Verschieben eines Kabels mit einer Anzahl von beweglichen Stützabschnitten nach Anspruch 4, die darin angebracht sind, welche einen ersten Druckbehälter (17) aufweist, der eine darin drehbar angebrachte Kabeltrommel und ein Führungsrohr (18) hat, das in Verbindung mit dem Inneren des Druckbehälters steht und in einem Sammelkopf (15) endet, dadurch gekennzeichnet, daß das freie Ende des Führungsrohrs mit einer hydraulischen Kupplung versehen ist, durch die das Führungsrohr mit dem zu inspizierenden Rohrleitungsabschnitt verbunden werden kann, und daß ein zweiter Druckbehälter (20) in Verbindung mit dem Inneren des Sammelkopfs (15) steht.

6. Verfahren zum Vorschieben eines Kabels mit einer Anzahl von beweglichen Stützabschnitten in einem Rohrleitungsabschnitt nach Anspruch 4, die an diesem angebracht sind, dadurch gekennzeichnet, daß zwischen aufeinanderfolgenden, sich bewegenden Teileinheiten (3₁, 3₂,... 3ₙ) Flüssigkeitssäulen aufgebaut werden, und daß von einem Ende des Rohrleitungsabschnittes ein axialer Druck auf die Anordnung aus den damit mitumfaßten beweglichen Teileinheiten, Flüssigkeitssäulen und dem Kabel ausgeübt wird.

7. Verfahren zum Vorschieben eines Kabels mit einer Anzahl von beweglichen Stützabschnitten nach Anspruch 4, die an diesem angebracht sind, unter Verwendung einer Vorrichtung nach Anspruch 5 in einem Rohrleitungsabschnitt einer Rohranordnung, die einen zugänglichen Sammelkopf (15) hat, der in Verbindung mit verschiedenen Rohrleitungen ist, die daran parallel angeschlossen sind, wobei die folgenden Schritte ausgeführt werden:

a) das Kabel wird in seiner Gesamtheit in einem Druckbehälter (17) angebracht, der in Verbindung mit einem zu inspizierenden Rohrleitungsabschnitt steht,

b) der Druckbehälter (17), der Sammelkopf (15) sowie die Rohranordnung werden vollständig mit einer Flüssigkeit gefüllt,

c) ein axialer Druck wird auf die in dem Druckbehälter (17) vorhandene Flüssigkeit ausgeübt, und die aus dem Druckbehälter (17) herausgedrückte Flüssigkeit wird über eine gesonderte Leitung zu dem zu inspizierenden Rohrleitungsabschnitt sowie zugleich mit dem Schritt c) geleitet,

d) das Innere des Sammelkopfs (15), das außerhalb relativ zu dieser gesonderten Leitung liegt, in Verbindung mit einem Flüssigkeitsauslaß gebracht wird.

8. Verfahren zum Entfernen eines Kabels mit einer Anzahl von beweglichen Stützabschnitten aus einem Rohrleitungsabschnitt nach Anspruch 4, die an diesem angebracht sind, unter Verwendung einer Vorrichtung nach Anspruch 5, bei dem unter Anwendung des Verfahrens nach Anspruch 6 das Kabel in den zu inspizierenden Rohrleitungsabschnitt eingeführt wurde, wobei folgende Schritte ausgeführt werden:

a) der auf die im Druckbehälter (17) vorhandene Flüssigkeit ausgeübte axiale Druck wird aufgehoben,

b) der Druckbehälter (17) wird in Verbindung mit einem Flüssigkeitsauslaß gebracht, und

c) ein axialer Druck wird auf die im Flüssigkeitssammelkopf vorhandene Flüssigkeit insoweit ausgeübt, daß sie außerhalb dieser gesonderten Leitung ist.

**Revendications**

1. Appareil conçu pour être avancé le long de la paroi intérieure d'un tube (2) ou d'une section de circuit tubulaire, pour déplacer un câble (1) et/ou un support qui y est relié à travers ledit tube ou ladite section tubulaire en réponse à une poussée exercée dans une direction axiale choisie, comprenant une pluralité d'unités élémentaires (3₁; 3₂) maintenues longitudinalement à distance les unes des autres à intervalles le long du câble (1), caractérisé en ce que:

- chaque unité élémentaire (3₁; 3₂) comprend un jeu de nervures d'étanchéité (11₁; 11₂) réalisées chacune dans un matériau déformable élastiquement, lesdites nervures d'étanchéité étant disposées coaxialement et espacées axialement les unes par rapport aux autres;

- chacune desdites nervures d'étanchéité (11₁; 11₂) est prévue pour assurer une étanchéité au liquide contre ladite paroi intérieure, au moins lorsqu'elles sont fixes par rapport à cette dernière;

- chaque unité élémentaire (3₁; 3₂) comprend des moyens de commande (5) qui, en réponse à une pression exercée sur eux, ont pour effet de décoller sélectivement la circonférence extérieure uniquement de la nervure d'étanchéité, qui est la première lorsque ladite unité élémentaire se déplace, de ladite paroi intérieure, ce qui permet ainsi à ladite unité élémentaire d'avancer facilement.

2. Appareil conforme à la revendication 1, caractérisé en ce:

- que lesdits moyens de commande incluent un coulisseau sensiblement cylindrique (5) comprenant deux collerettes de forme circulaire (9₁; 9₂);

- que ledit coulisseau (5) est monté coulissant par rapport aux nervures d'étanchéité (11₁; 11₂);

- que lesdites nervures d'étanchéité (11₁; 11₂) délimitent des chambres (8₁; 8₂) qui sont extensibles dans a direction axiale;

- que ledit coulisseau (5), en réponse à une poussée exercée dans l'une resp. l'autre des directions axiales, peut coulisser par rapport aux nervures d'étanchéité dans l'une resp. l'autre des directions axiales, de manière que sa première collerette de forme circulaire (9₁, resp. 9₂), en poussant contre un épaulement ($10_1$, resp. $10_2$) inclus dans la nervure d'étanchéité ($11_1$, resp. $11_2$), agrandit la chambre principale ($8_1$, resp. $8_2$), et diminue ainsi la circonférence extérieure de la première nervure d'étanchéité ($11_1$, resp. $11_2$) et fait avancer ladite unité élémentaire ($3_1$; $3_2$) le long dudit tube (2).

3. Appareil conforme à la revendication 1, caractérisé en ce:

- que ladite unité élémentaire inclut un boîtier ayant une première chambre de pression ($12_1$) et une seconde chambre de pression ($12_2$).

- que lesdites chambres de pression ($12_1$; $12_2$) sont alignées coaxialement les unes aux autres, et isolées les unes des autres;

- que lesdites chambres de pression ($12_1$; $12_2$) sont toutes deux entourées par une nervure d'étanchéité;

- que lesdites chambres de pression ($12_1$; $12_2$) sont toutes deux adaptées pour recevoir une pression de commande;

- que lesdits moyens de commande incluent une portion de paroi extensible axialement dans chacune desdites chambres de pression ($12_1$; $12_2$);

- que ladite portion de paroi extensible, en réponse à une pression de commande fournie à ladite chambre de pression ($12_1$, resp. $12_2$), est sollicitée pour s'étendre dans la direction axiale de l'unité élémentaire de façon que la circonférence extérieure de sa nervure, d'étanchéité entourant soit réduite.

4. Une section de support mobile composée de deux unités élémentaires, telle que décrite en tant que partie d'un appareil conforme à l'une quelconque des revendications 1 à 3, dans laquelle lesdites unités élémentaires ($3_1$, $3_2$) sont reliées entre elles au moyen d'un tube creux coaxial (6) en matériau flexible, caractérisée en ce que la longueur d'une telle section de support mobile est environ 20 à 50 fois plus petite que la longueur d'un câble (1) fixé entre une paire de sections de support mobiles successives.

5. Appareil pour faire avancer un câble avec plusieurs sections de support mobiles, conformes à la revendication 4, qui y sont reliées, comprenant un premier récipient de pression (17) ayant un tambour à câble monté à rotation dans celui-ci, et un tube de guidage (18) en communication avec l'intérieur du récipient de pression et aboutissant dans la tête collectrice (15); caractérisé par: l'extrémité libre dudit tube de guidage munie d'un raccord hydraulique par l'intermédiaire duquel ledit tube de guidage peut être relié à la section de circuit tubulaire à inspecter et un second récipient de pression (20) communiquant avec l'intérieur de la tête collectrice (15).

6. Un procédé pour faire avancer, dans une section de circuit tubulaire, un câble avec plusieurs sections de support mobiles, conformes à la revendication 4, qui y sont reliées, caractérisé en ce que, entre les unités élémentaires mobiles successives ($3_1$, $3_2$, ..., $3_n$) sont réalisées des colonnes de liquide, et en ce que, à partir d'une extrémité de la section de circuit tubulaire, une poussée est exercée sur l'ensemble d'unités élémentaires mobiles, des colonnes de liquide et du câble qui y est contenu.

7. Un procédé pour faire avancer un câble électrique, auquel des sections de support mobiles, conformes à la revendication 4, sont reliées, à l'aide d'un appareil conforme à la revendication 5, dans une section de circuit tubulaire d'un ensemble tubulaire comprenant une tête collectrice accessible (15) communiquant avec différents circuits tubulaires qui y sont reliés en parallèle, tandis que les étapes suivantes sont réalisées:

a) ledit câble est entièrement disposé dans un récipient de pression (17) communiquant avec une section de circuit tubulaire à inspecter;

b) ledit récipient de pression (17), la tête collectrice (15), ainsi que l'ensemble tubulaire sont entièrement remplis d'un liquide;

c) une poussée est exercée sur le liquide présent dans le récipient de pression (17), tandis que le liquide expulsé dudit récipient de pression (17) est conduit, via un circuit séparé, à la section de circuit tubulaire à inspecter; et simultanément à l'étape c)

d) l'intérieur de la tête collectrice (15), dans la mesure où elle est extérieure par rapport audit circuit séparé, est mis en communication avec une évacuation de liquide.

8. Un procédé pour retirer, d'une section de circuit tubulaire, un câble avec plusieurs sections de support mobiles, conformes à la revendication 4, qui y sont reliées, à l'aide d'un appareil conforme à la revendication 5, lequel câble, en appliquant le procédé conforme à la revendication 6, ayant été introduit dans cette section de circuit tubulaire à inspecter, tandis que les étapes suivantes sont réalisées:

a) la poussée exercée sur le liquide présent dans ledit récipient de pression (17) est supprimée;

b) ledit récipient de pression (17) est mis en communication avec une évacuation de liquide; et

c) une poussée est exercée sur le liquide présent dans la tête collectrice dans la mesure où il est présent hors dudit circuit séparé.

# FIG. 1

# FIG. 2

# FIG. 3

# FIG. 4

FIG. 5

FIG. 6